# EUROPEAN PATENT APPLICATION

(11) **EP 2 389 819 A1**
(43) Date of publication of application: **30.11.2011**
(21) Application number: 11178679.4
(22) Date of filing: 11.03.2009
(51) Int. Cl.: A24D 3/16, C01B 31/08

(54) **Method and apparatus for the plasma processing of filter material**

(30) Priority: 31.03.2008 GB 0805773
(62) Divisional of application: 09726521.9
(71) Applicant: British American Tobacco (Investments) Limited, London WC2R 3LA (GB)
(72) Inventor: Mola, Michele, London, WC2R 3LA (GB); D'Agostino, Riccardo, 70126 Bari (IT); Favia, Pietro, 70126 Bari (IT); De Vietro, Nicoletta, 70126 Bari (IT); Fracassi, Francesco, 70126 Bari (IT)
(74) Representative: Gill, Siân Victoria

(57) **Abstract**

One embodiment of the invention provides a method of manufacturing a smoking article filter material comprising carbon. The method includes modifying the filtration properties of the filter material by altering the surface of the filter material. The surface alteration is performed by plasma processing. Another embodiment of the invention provides a smoking article filter material comprising granular carbon. The carbon has undergone surface alteration by plasma processing to modify the filtration properties of the filter, and the carbon is incorporated into a carrier.

## Description

### Field of the invention

The present invention relates to filters, including filters for smoking articles such as cigarettes.

### Background of the Invention

Most cigarettes include a filter for absorbing and adsorbing vapours and accumulating particulate smoke components. The main component of most filters is a plug of cellulose acetate tow wrapped in filter paper. This material is typically produced as a synthetic fibre from cotton or tree pulp. A plasticiser, such as triacetin (glycerol triacetate) may be used to help bond the fibres together.

The filter in a cigarette has to strike a balance between removing undesirable components of cigarette smoke while retaining a product that is satisfactory to consumers. Accordingly, there is interest in improving the behaviour of cigarette filters.

A variety of mechanisms are known for including carbon or charcoal in cigarette filters to try to enhance their filtration properties. For example, the carbon may be included as a separate element within the filter, or particulate carbon may be distributed among the filter tow and/or the filter wrapping paper. US 2006/0151382 discloses the use of non-porous carbonaceous and, excepting carbon nanotubes, nano-structured material which is suitable for use in a cigarette filter. Metal may be deposited onto the carbon from a gas phase, for example using chemical or physical vapour deposition. One of the drawbacks with chemical vapour deposition is that it generally involves the use of solvents, which may then lead to problems with contamination or residues.

### Summary of the Invention

The invention provides a method of manufacturing a filter material comprising carbon, suitable for use in a smoking article. The method includes modifying selective filtration properties of the filter material by altering the surface of the filter material. The surface alteration is performed by plasma processing.

Non-equilibrium or low temperature plasma processes (see, for example, Wertheimer et al; Low Temperature Plasma Processing of Materials: Past, Present and Future; Plasma Processes and Polymers, 2, 7-15, 2005) are able to modify chemical composition and morphology of material surfaces, including filter materials, while leaving their bulk properties unaltered. The use of plasmas allows a coating of engineered chemical composition and properties to be deposited on a filter material, or pre determined chemical functionalities to be grafted. A very wide range of chemical compositions are available for such surfaces by properly tuning plasma parameters, including compositions that cannot be readily achieved in a solution. In addition, solvents do not have to be used in plasma processes, which avoids the risk of contamination and residues, and lowers the environmental impact of the modification process. Such plasma-induced changes in surface composition and morphology will generally affect the filtration properties. For example, an increase in surface area (e.g. due to increased roughness) might lead to improved adsorption of volatile compounds, as well as a new surface chemical composition enriched with proper chemical groups.

The modified filtration properties usually are not uniform for all smoke constituents, but they can become more selective. This enables targeted modification of the filtration properties of the filter materials in a way that certain smoke constituents will be reduced more than others. The outcome can be an enhanced smoking article which remains attractive to consumers.

Possible modifications to a filter include increasing the acidic nature of its surface, aiming to potentially improve the adsorption of basic chemicals present in smoke or, *vice versa*, increasing its basic nature to potentially improve the adsorption of acidic compounds.

Thus, selective modification of the filtration properties of the filter material may comprise increasing the adsorption of acidic elements.

Alternatively, selective modification of the filtration properties of the filter material may comprise increasing the adsorption of alkaline elements.

Alternatively, selective modification of the filtration properties of the filter material may comprise increasing the hydrophilic nature of the surface of the material.

Enhancing the hydrophobic aspects of the filter could provide better resistance against moisture.

It will be appreciated that a particular filter material may be subjected to one or more modification processes in sequence, to confer one or more properties to the final filter. Thus, a filter material may, for example, be subjected to two different plasma processing treatments. It will also be appreciated that a particular filter may be composed of different aliquots of material, each one plasma-processed in a different way in order to confer a desired range of filtration properties to the final filter. Thus, a filter material may comprise a first material subjected to a first plasma processing treatment and a second material subjected to a second plasma processing treatment.

Examples of gases that could be used during the plasma process include NH₃ (for grafting basic groups containing nitrogen), with alternatives such as N₂ or H₂; and O₂ (for grafting acidic groups), with alternatives such as H₂O vapours. Plasma-grafting, as well as plasma-etching processes are highly substrate-dependent meaning that the final chemical composition of the grafted surface depends strongly on the nature of the substrate material. Plasma Enhanced Chemical Vapour Deposition (PE-CVD) processes, instead, depend much less on the nature of the substrate. Thus, the plasma processing may comprise, for example, plasma-enhanced chemical vapour deposition with acrylic acid. The plasma processing may also, or alternatively, comprise etching with O₂ and/or NH₃.

Examples of gas/vapour compounds that could be used to generate a coating onto a surface with a PE-CVD process, possibly mixed with argon or other inert buffer gasses, include acrylic acid (AA) or other organic acids (for a coating with surface acid groups and properties), and allylamine (AAm) or other organic amines (for a coating with surface basic groups and properties) A proper tuning of plasma parameters such as power, pressure, feed nature and flow rate among others, under appropriate diagnostic control, usually can tune the fragmentation of the feed in the discharge, thus the density of active species (radicals, atoms, ions, etc) that can interact with the substrate, hence the composition and the properties of the modified substrate. Changing the nature of the feed gas/vapour compound, usually referred to as "the monomer" in PE-CVD, leads to many possible coatings of different nature and properties (e.g., silica-like, teflon-like, and others), some of which have wide industrial use.

The filter material may comprise carbon in a granular form. The carbon may be plasma processed in this granular form in a properly configured plasma reactor, prior to incorporation into a filter (such as by impregnating into cellulose acetate tow). Another possibility is that the carbon is incorporated into a carrier before the plasma processing. For example, the carbon may be incorporated into a thread or sheet of material such as paper. The manufacturing apparatus may adopt a roll-to-roll arrangement for the thread or sheet material to allow the filter material to be fed through a plasma processing chamber. One possibility is to pass the filter material through multiple processing chambers, with each chamber being used for a different form of plasma processing.

The invention also provides comprises a filter material suitable for use in a smoking article. The filter material may comprise carbon that has undergone surface alteration by plasma processing to modify selective filtration properties of the filter.

According to the invention there is also provided a smoking article (such as a cigarette) incorporating such a filter.

The approach described herein therefore generally involves altering with non-equilibrium plasma processes the surface chemical composition and other properties of filter material, so that a more efficient adsorption of smoke from cigarettes and other such products occurs at the surface of the filter material. In one particular embodiment, activated carbon in the form of carbon granules is used as a filter material (e.g. for cigarettes), and is plasma processed to modify its surface properties. Simulated smoking experiments have been performed with such plasma-processed carbon granules, and they have been found to have enhanced filtration properties for removing certain constituents from smoke when compared with unprocessed carbon granules.

### Brief Description of the Drawings

For a better understanding of the present invention, reference will now be made by way of example to the following drawings.
Figure 1 is a schematic representation of a plasma reactor chamber suitable for the homogeneous plasma processing of granular materials in accordance with one embodiment of the invention;
Figure 2 is a schematic representation of a roll-to roll plasma reactor chamber suitable for processing substrates in for of a web, in accordance with one embodiment of the invention; and
Figure 3 illustrates Water Contact Angle (WCA) data obtained with water solutions at different pH on graphite treated in the same plasma-processes used to impart pre-determined acid/basic character at the surface of carbon granules, in accordance with one embodiment of the invention.

### Detailed Description

### Plasma processes

Low pressure non-equilibrium cold plasmas (i.e. a room temperature plasma rather than a thermal plasma at thousands of degrees) provide a valuable tool to modify the surface composition and topography of a material with no alteration of its bulk properties. Plasma processes are known in many different industries, including microelectronics, semiconductors, food and pharmaceutical packing, automobile, corrosion protection and biomaterials. Three main classes of plasma processes can be defined, namely: Plasma Etching, the ablation of materials through the formation of volatile products after interaction of the material with the active species produced in the plasma; Plasma Enhanced Chemical Vapour Deposition (PE-CVD), deposition of thin (5-1000 nm) organic or inorganic coatings; and Plasma Treatments, grafting of functional groups on materials using a glow discharge. Grafted functional groups may be partially associated with a certain degree of cross-linking of the treated surface.

Plasma etching, deposition, and treatment can be performed in a properly configured low pressure reactor - e.g. at 10⁻² -10 Torr (~1.3-1300 Pa). An electromagnetic field is transferred to a gas feed by means of electrodes or other means (e.g., a coil external to a dielectric reactor vessel) to ignite a glow discharge. Usually, alternated (e.g., in the radiofrequency, at 13.56 MHz) rather than continuous electric fields are utilized. Materials exposed to a glow discharge are modified through the interaction of the species generated in the gas plasma phase (atoms, radicals, ions) with the surface of the material. After the plasma process, low weight molecules formed in the plasma from recombination reactions and unreacted monomer molecules are pumped away.

Plasma processes modify the surface of materials through the synthesis of stable interfaces. Covalent bonds are formed between the active species in the plasma phase and the substrate material. As the skilled person is aware, the duration of plasma processes increases the thickness of a coating produced by PE-CVD, the quantity (depth) of the etched material in etching processes and the extent of the grafting in plasma treatments. More generally, the resulting surface modification can be controlled by properly tuning and controlling experimental parameters such as input power, frequency and modulation of the applied electric field; nature, flow rate and pressure of the gas feed; temperature, bias potential and position of the substrate, and others. These external control parameters in turn impact various internal factors, such as ionization degree of the gas feed; density of active (atoms, ions, radicals, etc.) species in the plasma phase; process homogeneity; deposition, etching and treatment rate. The internal parameters can be controlled using various diagnostic facilities such as optical emission spectroscopy (OES), laser-induced fluorescence (LIF), and absorption spectroscopy (UV-visible and IR).

As described herein, low pressure plasma processes are utilized to tailor surface chemical composition and properties of carbon which in turn impacts its filtration properties. Figure 1 shows a reactor suitable for the plasma treatment of granular materials. Such granular material might be in the range 18-40 mesh, which corresponds to approximately 420-1000 microns. The reactor shown in Figure 1 is a rotating device able to homogeneously process up to 500g of carbon granules in RF (13.56 MHz) Glow Discharges while stirring. The reactor comprises a rotary glass chamber 1 having glass wings 2, a fixed RF external electrode 3, a ground electrode 4, a fixed flange 5 and a rotating vacuum flange 6. The carbon substrate may also or alternatively be provided in a different form, for example, graphite.

Figure 2 illustrates another plasma reactor chamber, based on a movable web input using a roll-to-roll arrangement. The reactor chamber comprises a pre-chamber 7 containing a first roll 8, a reaction chamber 9 having an RF electrode 10, and a post-chamber 11 containing a second roll 12. The reactor chamber further comprises a set of pumps 13. This configuration is suited for materials that are either in thread or sheet form, as opposed to powder or granular form, and enables a form of continuous processing. The machine can be used, for example, for processing cellulose tow containing carbon particles. In this case, the tension and curvature of the material can be tightly controlled in view of the properties of the tow. In particular, the path for the tow 14, as shown in Figure 2, excludes corners or sharp curvatures in order to help avoid damage to the tow. The roll-to-roll apparatus for Figure 2 can also be used for processing carbon paper (i.e., paper impregnated or coated with carbon particles).

Figure 3 shows data regarding tuning the acid/basic surface properties of carbon materials by means of plasma processes. In this case RF (13.56 MHz) glow discharges fed with O₂/NH₃ (grafting) or AA/AAm vapour mixtures (PE-CVD) were used to alter the surface of flat graphite substrates with acid (O-containing) and/or basic (N-containing) surface groups.

O₂/NH₃ grafting discharges were performed at 0.250 mbar of pressure for 2 min, with a RF power input of 100 Watt. Total flow rate was 10 sccm, with O₂/NH₃ flow ratios of 10/0, 5/5 and 0/10 sccm/sccm. AA/AAm PE-CVD discharges were performed at 0.120 mbar of pressure for 10 min, with an RF power input of 100 Watt. Total flow rate was 10 sccm, with AA/AAm flow ratios of 4/0, 2/2 and 0/4 sccm/sccm and 6 sccm Ar as gas buffer. WCA measurements of untreated and grafted/coated graphite were performed with 2 µl drops of acid (HCl) and basic (NaOH) water solutions.

Untreated graphite surfaces exhibited WCA values of about 90°, constant with the pH of the probing solution, since no acid/basic groups were present on the surface. All discharges under scrutiny lowered the WCA value of graphite, since both types of groups added, O- and N-containing, either grafted or included in a coating, are of polar, and hydrophilic nature with respect to bare carbon.

100% O₂ and 100% AA discharges added acid O-containing groups (-COOH, OH and others) at the surface of graphite; WCA data, in fact, were higher at low pH values, then became low when basic (high pH) solutions were used, due to interactions between the acid groups at surface of the substrate and the solution. Exactly the opposite behaviour was found for 100% NH₃ and 100% AAm discharges, when basic N-containing groups (-NH₂ and others) were added at the surface of graphite; in these trends WCA values were found higher when high pH solutions were used, then decreased at acid (low) pH due to interactions, in this case, between the basic groups at surface of the substrate and the solution. With 1/1 O₂/NH₃ and AA/AAm discharges both types of groups were added at the same time, acid and basic, at the surface of graphite, and an amphoteric behaviour was observed, with WCA values lowered (strong surface/solution interactions) at low and high pH values with respect to a neutral pH. These examples illustrate the degree of control that can be exercised over the substrate by using reactants having different properties during the plasma processing.

### Plasma Processing of Carbon Granules

Carbon granules were processed in a plasma reactor such as that shown in Figure 1 using various surface processes, aimed to impart acid/basic surface character, as shown in Figure 3.

### PE-CVD in acrylic acid / Ar RF Glow Discharges

This PE-CVD process is run in discharges fed with AA vapours and Ar. Ar/AA flow ratio, RF power, pressure, rotation of the reactor and process duration are controlled in a way that a cross-linked coating with a composition of CHₓO_{y} grows tightly bound on the surface of carbon granules, with an average thickness that can be tuned to a value within the range 5-50 nm.

For samples produced according to this method, characterization data obtained with X-ray Photoelectron Spectroscopy (XPS), FT-IR and WCA diagnostic techniques revealed a very hydrophilic coating, as expected (compare with WCA data on in Figure 3, 100% AA) with WCA unmeasurable (water is absorbed) on a layer of granules due to its discontinuity. The acid nature of such a coating as shown in Figure 3 is due to the presence of O-containing groups, including carboxylic, hydroxyl and carbonyl amongst others. The surface density of such groups in the coating depends on the fragmentation degree of the AA monomer in the plasma phase, which can be controlled by proper tuning of the plasma parameters; e.g., it is lowered by lowering the power input and/or by increasing the pressure.

The plasma-deposited layer has a very different composition and structure with respect to a conventional poly-acrylic acid, where only carboxylic groups are present as O-containing groups. A certain degree of cross-linking (C-C and C-O bonds) are present in this plasma-deposited coating, providing the stability of the coating itself in air and in water. Indeed, analysis performed some time after deposition for samples aged in air and in water, and no relevant compositional changes were detected.

### Plasma Treatments in O₂ Glow Discharges

This process is run in discharges fed with O₂, in some cases mixed with Ar. Process parameters can be controlled so that an oxidized layer of oxygen-containing chemical groups (carboxylic, hydroxyl and carbonyl) is formed at the surface of carbon, increasing its polar (hydrophilic, acid) character. Oxygen atoms are formed in the plasma from fragmented O₂ molecules, whose reactivity with carbonaceous materials is very high. Carbon is consumed due to etching (ashing) reactions that generate CO and CO₂ molecules, and leave the oxidized layer on carbon. The average thickness of the modified layer is very shallow; the etching rate is tuneable with the plasma conditions. Generally, the higher the density of oxygen atoms in the plasma, the higher the etching rate, with the roughness and surface area of the oxidized carbon also being increased.

For samples prepared accordingly, compositional XPS and WCA data show a marked hydrophilic surface on carbon, with unmeasurable WCA (water is absorbed) on a layer of granules. The grafted surface exhibits a certain acidic character due to the presence of the oxygen-containing functionalities, as shown in Figure 3 for flat graphite. The stability of the treated surface in air is very good, according to ageing compositional data.

### Plasma Treatments in NH₃ Glow discharges

This treatment (grafting) process is run in discharges fed with NH₃, in some cases mixed with Ar. Process parameters are controlled so that a layer of nitrogen-containing chemical groups (such as amino, imino, and others) is grafted at the surface of the carbon by interaction with N-containing radicals formed from fragmented NH₃. With respect to the plasma treatment with O₂, NH₃ discharges trigger milder surface modification processes, and the etching rate is very low. The average thickness of the modified layer is very shallow; and the roughness and surface area of NH₃-plasma treated carbon is only slightly altered.

Compositional XPS, and WCA data show a marked hydrophilic carbon surface, with WCA unmeasurable (water is absorbed) on a layer of granules. The N-grafted surface exhibits a certain basic character due to the presence of the nitrogen-containing functionalities, as shown in Figure 3. The stability of the treated surface in air is very good, according to ageing compositional data.

### Discussion of Results

### Carbon: Smoke Chemistry

Six standard coconut carbon samples (~10 g each) were plasma-processed in a rotating reactor of the sort schematized in Figure 1 with gas feeds and operating parameters as shown in Table 1:

**Table 1: Gas feeds and operating parameters**

| Sample (~10g) | Gas feed and flow | Pressure | Power | Rotation | Time |
|---|---|---|---|---|---|
| 1 | O₂ 10 sccm | 0.250 mbar | 20 W | 20 rpm | 15 min |
| 2 | O₂ 10 sccm | 0.250 mbar | 100 W | 20 rpm | 15 min |
| 3 | NH₃ 10 sccm | 0.250 mbar | 20 W | 20 rpm | 15 min |
| 4 | NH₃ 10 sccm | 0.250 mbar | 100 W | 20 rpm | 15 min |
| 5 | AA 5 sccm, Ar 20 sccm | 0.300 mbar | 20 W | 20 rpm | 60 min |
| 6 | AA 5 sccm, Ar 20 sccm | 0.300 mbar | 100 W | 20 rpm | 60 min |

After the plasma processing, 60mg of each treated carbon additive was incorporated into a cavity filter (12mm cellulose acetate mouth end/5mm of filter additive/10mm cellulose acetate rod end) attached to a tobacco rod containing a Virginia style tobacco of density 229mg/cm³, length 56mm, with an overall cigarette circumference 24.6mm. No filter tip ventilation was used to avoid introducing another variable.

Two controls were used. In the first 60 mg of untreated carbon was added to a cigarette with the same design as above. In the second, an empty cavity 5mm long was used in the filter. The cigarettes were conditioned at 22°C and 60% relative humidity for 3 weeks prior to smoking. Smoking was performed under ISO conditions - i.e. one 35ml volume puff of 2 seconds duration was taken every minute. Yields were normalised to unit tar and the percentage reductions relative to the cigarette with untreated carbon were calculated and are shown in Table 2 below (percentage reductions of 21 % and more are shaded. Positive numbers indicate higher reductions compared to the untreated carbon).

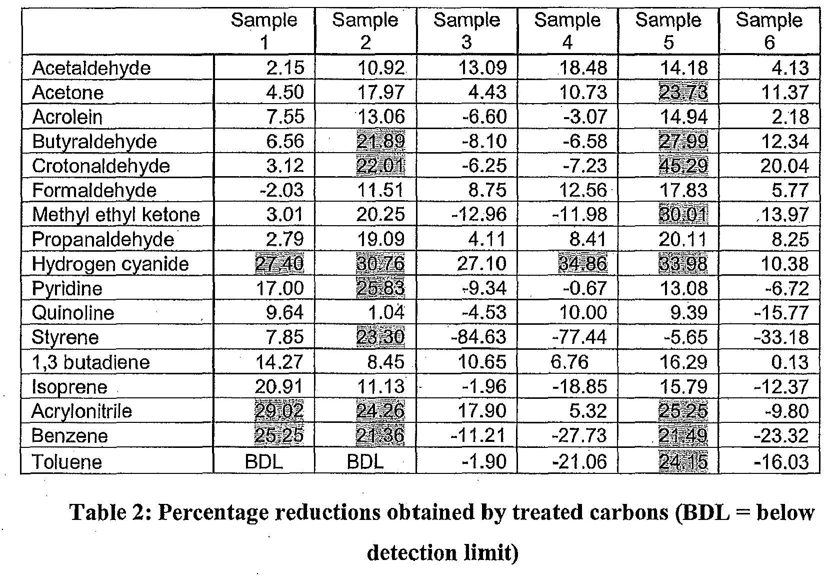

There were no differences in basic smoke chemistry between the treated and untreated carbon, for example tar was about 10 mg/cig, similar CO levels were seen, etc. Samples 2 and 5 gave significant improvements for some vapour phase compounds when compared to untreated carbon, whilst samples 3 and 4 did not offer improvements. Sample 5 and 6 differ considerably in reductions although the gas feed is the same. This is probably due to the fact that the surface density of carboxylic groups depends heavily on the fragmentation degree of the monomer in the plasma phase, e.g., it is lowered by increased power.

Although the skilled person will be aware of many modifications to the particular embodiments described, the present invention is not limited to any of the particular embodiments described herein, but rather is defined by the appended claims and their equivalents.

## Claims

1. A smoking article filter material, wherein said filter material comprises granular carbon that has undergone surface alteration by plasma processing to modify selective filtration properties of the filter, and the granular carbon is incorporated into a carrier.

2. The filter material of claim 1, wherein the carrier is cellulose acetate tow or paper.

3. The filter material of either of claims 1 or 2, wherein a first portion of the carbon has undergone surface alteration in accordance with a first plasma processing treatment, and a second portion of the carbon has undergone surface alteration in accordance with a second plasma processing treatment.

4. A method of manufacturing a smoking article filter material, wherein the filter material comprises carbon, and said method includes modifying selective filtration properties of the filter material by altering the surface of the filter material by plasma processing.

5. The method of claim 4, wherein the plasma processing comprises plasma-enhanced chemical vapour deposition with acrylic acid.

6. The method of either one of claims 4 or 5, wherein the filter material is subjected to two different plasma processing treatments.

7. The method of either one of claims 4 or 5, wherein the filter material comprises a first material subjected to a first plasma processing treatment and a second material subjected to a second plasma processing treatment.

8. The method of one any of claims 4 to 7, wherein the filter material comprises a thread or sheet of material, and the thread or sheet of material incorporates carbon in granular form.

9. The method of claim 8, wherein the plasma processing includes using a roll-to-roll arrangement for the thread or sheet material to allow the filter material to be fed through a plasma processing chamber.
